# EUROPEAN PATENT SPECIFICATION

(11) **EP 1 817 200 B1**
(45) Date of publication and mention of the grant of the patent: **03.08.2011**
(21) Application number: 05804730.9
(22) Date of filing: 30.11.2005
(51) Int. Cl.: B60N 2/48

(54) **A HEADREST FOR A VEHICLE SEAT**
KOPFSTÜTZE FÜR EINEN FAHRZEUGSITZ
APPUI-TETE POUR SIEGE DE VEHICULE

(30) Priority: 01.12.2004 SE 0402919; 03.12.2004 US 593049 P
(43) Date of publication of application: 15.08.2007
(73) Proprietor: Kongsberg Automotive AB, 565 28 Mullsjö (SE)
(72) Inventor: KARLBERG, Rune, S-560 25 Bottnaryd (SE); Wain, Robert, Burton on Trent DE13 0YD (GB)
(74) Representative: UEXKÜLL & STOLBERG
(86) International application number: PCT/SE2005/001795
(87) International publication number: WO 2006/068571

(56) References cited:
- EP-A- 1 449 713
- DE-A1- 4 306 254
- DE-A1-102004 003 390
- DE-B3-102004 003 498
- US-A- 4 720 146
- US-A- 4 865 388
- US-A- 6 079 776

## Description

### TECHNICAL FIELD

The invention relates to a headrest for a vehicle seat, comprising a fixed part for attachment in a vehicle seat, and at least a first moving part The first moving part is movably mounted in a mounting in the fixed part, so that it can be moved between a first and a second position relative to the fixed part.

### BACKGROUND ART

Headrests for vehicle seats are well known, and often comprise moving parts, so called "wings', which are movably secured in the headrest, and the angular position of which relative to the headrest can be adjusted according to requirement and can thus provide support for the head in the lateral direction.

A drawback with currently known solutions as regards moving wings in headrests is that they have to be adjusted by hand, which can endanger traffic and lead to uncomfortable movements. A further drawback with currently known solutions is that the wings are locked in a set angular position by means of friction, mechanical engagements or the like, which leads to wear, and thus to deteriorated locking function after a period of use.

EP 1 449 713 A2 discloses a headrest having the features of the preamble of claim 1, i.e: a headrest including a moveable part, wherein it is mentioned that the movement of the moveable part may be accomplished by an electrical, a pneumatical or hydraulical adjustment drive. Pneumatical drives may generally include several moveable parts and can be of complicated construction which is disadvantageous in view of reliability, live time and manufacturing costs.

### DISCLOSURE OF INVENTION

There is therefore a need for a solution by which a moving wing in a headrest can be manoeuvred in a simple manner. Such a solution should expediently also offer improved functionality which is not at risk of being degraded over time.

This need is met by the present invention as set out in claim 1. The movement of the moving part from the said first position to the said second position is achieved by means of an inflatable element In the headrest, which is inflated by compressed air and thus expands, wherein the inflatable element is comprised of two or more chambers. Furthermore, the moving part is maintained in the said second position by means of the inflated inflatable element.

By means of the invention, a solution is therefore offered in which the movement of wings or similar moving parts on a headrest can be manoeuvred by means of a control device which can be disposed in an, in principle, arbitrary location on or adjacent to the vehicle seat, since the control device can be designed to control the inflation or deflation of the inflatable element.

Furthermore, the moving part - the wing - is maintained in a desired position by the inflated inflatable element between the wing and a fixed part in the headrest, which eliminates the need for solutions reliant upon friction for the locking function. A locking function is thus created which does not suffer from wear in the same way as a friction solution.

### BRIEF DESCRIPTION OF DRAWINGS

The invention will be described in greater detail in the following description with reference to the appended drawings, in which:
Fig. 1 shows a headrest according to the invention, viewed from the front, and
Fig. 2 shows the headrest from Fig. 1, viewed obliquely from above on one side, and
Fig. 3 shows the headrest from Fig. 1 and Fig. 2 from the side, and
Fig. 4 shows the headrest according to the invention, viewed from above, and
Fig. 5 shows the headrest according to the invention in greater detail from the rear, and
Fig. 6 shows the same as Fig. 5 but from the front, and
Fig. 7 shows an alternative embodiment at the same angle as Fig. 3.

### MODE(S) FOR CARRYING OUT THE INVENTION

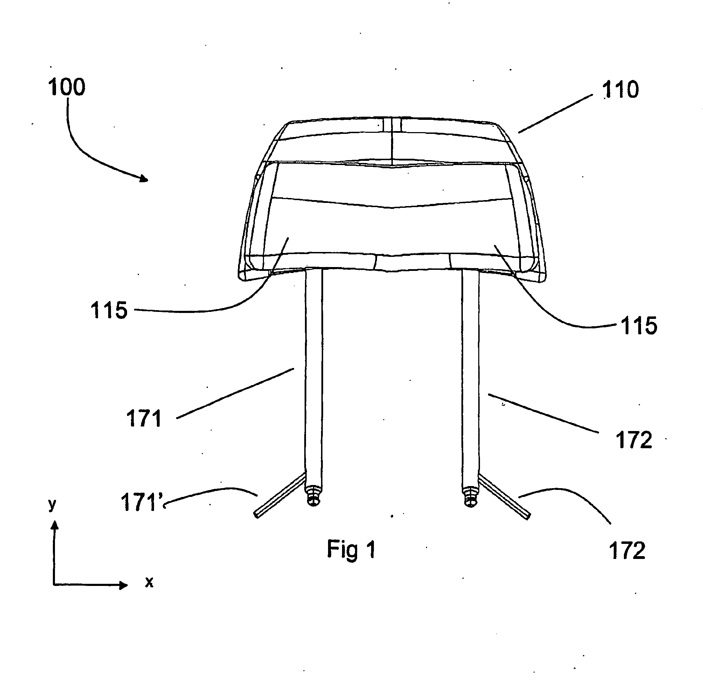

In Fig. 1, a headrest 100 according to the invention is shown. As can be seen, and as will be described in greater detail further below, the headrest 100 comprises a fixed part 110 for attachment in a vehicle seat, and at least a first moving part 115. Furthermore, the headrest can comprise, or be connected to, a first 171 and a second leg 172.

In Fig. 1 and throughout the description, the headrest is shown to comprise two moving parts 115, symmetrically arranged in the headrest 100, which is a preferred embodiment. It will be appreciated, however, that the number of moving parts, as well as their positioning in the headrest, can in principle be freely varied within the scope of the invention.

The moving part 115 is disposed in a mounting (not shown in Fig. 1) in the fixed part 110 in such a way that the moving part 115 can be moved forward and back relative to the back of the head of the person who is to sit in the seat, and can thus offer at least a first and a second position for the head. Such moving parts, "wings", are previously known, but the background art for such moving parts exhibits a number of problems: known wings are manoeuvred between their various positions by hand, which, if it is the driver of the vehicle who adjusts the wings on his headrest, results in the car only being steered with one hand, which is dangerous to traffic. Furthermore, the wings are held in their tilted-out positions by different types of friction locks, engagement parts or the like, which means that the locking function is degraded over time.

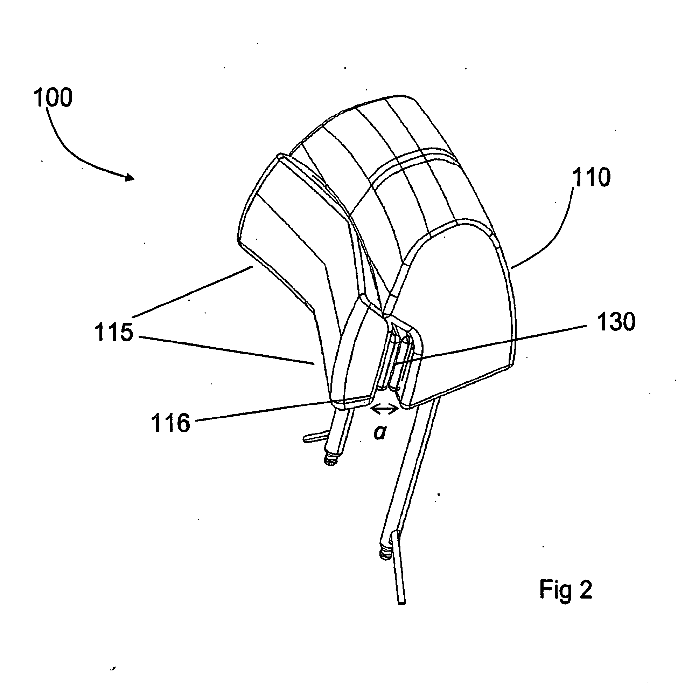

In Fig. 2, the headrest 100 according to the invention is shown, viewed obliquely from above on one side. This drawing reveals one of the distinguishing features of the present invention which solves the aforementioned problems with known moving parts in headrests: the headrest 100 according to the invention comprises at least one inflatable element 130, which can be inflated by compressed air and which is disposed in the headrest 100 such that, owing to its expansion, it can guide the moving part 115 from a first, inner position to at least a second, outer position. The use of the inflatable element 130 also allows continuous adjustment of the moving part between the first, inner and the second, outer position, if so desired.

The moving part 115 will further be maintained in a second, outer position by means of the expanded inflatable element 130, which means that friction locks etc. are not required. This type of locking is advantageous, since it is not degraded over time in the same way as previously known locking mechanisms for "wings".

The actual mechanism according to the invention for guiding the wing from the first to the second position is also advantageous compared with known solutions for the same thing, owing to a number of different factors: firstly, the inflation of the element 130 can be done by means of an existing compressed air system in the vehicle or even in the vehicle seat, if so desired, which simplifies the design and keeps down the cost, secondly the control of the wing movements by means of compressed air can be remote-controlled from a control device which can be placed in an, in principle, arbitrary location in the vehicle. This results in a manoeuvring of the wing movements which offers considerably greater traffic safety then previously.

The existing compressed air system which, in a preferred embodiment of the invention, is used to manoeuvre the wings is a compressed air system which is used in the vehicle seat to adjust, for example, lumbar supports and/or conduct massage.

As is shown in Fig. 2, the inflation of the inflatable element 130 brings about an increase in an angle α between an outer edge 116 of the first moving part 115 and the fixed part 110, which is another way of saying that "the wing" 115 is led out from the fixed part 110 by means of the inflatable element 130.

As is indicated in fig. 2, the inflatable element 130 is disposed between the first moving part 115 and the fixed part 110 with an extent stretching from a mounting (not shown) for the wing 115 in the headrest 110 to the said outer edge 116 of the moving part 115, the inflatable element 130 being shaped such that its expansion in the course of the inflation is proportional over its extent to the said increased angle α. In other words, the inflatable element will expand in different magnitude along the extent stretching from the mounting to the outer edge 116.

The supply of compressed air to the inflatable element 130 can be managed in a variety of ways within the scope of the invention, but in a preferred embodiment this is done by means of a solenoid valve which regulates the compressed air supply from a pump or an ordinary compressed air system to the element 130. The solenoid valve per se can be operated from a dedicated control device in the vehicle, which will be described elsewhere in the description.

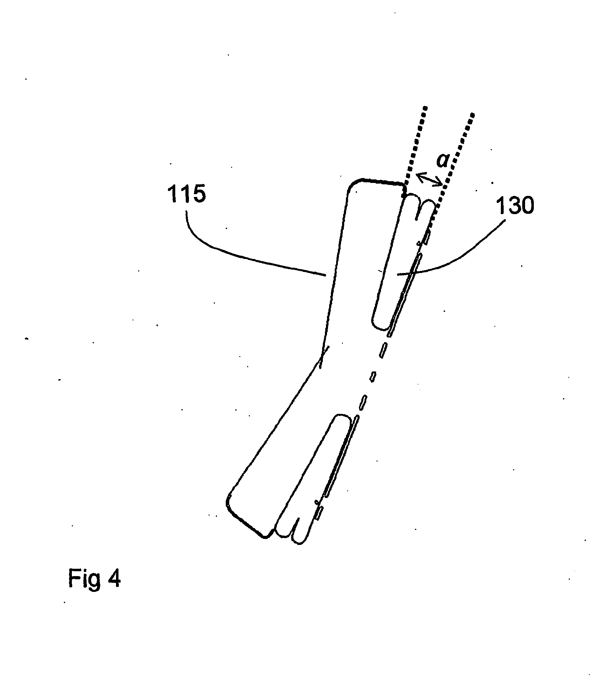

In Fig. 4, the headrest 100 is shown, for the sake of completeness, from above. The moving part 115 and the inflatable element are clearly apparent, as is the positioning of the inflatable element in rotation to the wing 115, as well as the angle α controlled by the inflatable element 130.

So far it has merely been stated how the wing 115 is made to move outward, in other words from the first to the second position, by means of the invention. When the wing is to be returned to an inner position, this can be done, for example, by the valve quite simply being opened, but this would mean that the element 130 could only be deflated to atmospheric pressure. Another solution would be polarity reversal of the said pump, but in a preferred embodiment of the invention the wing 115 is returned to an inner position from an outer position by the fact that the headrest 100 further comprises means (not shown) for returning the wing 115 to the first position if the element 130 is deflated due to opening of the valve.

These means for returning the wing 115 can be realized in a variety of ways, but are expediently some form of elastic element which is elongated upon expansion of the element 130 and which, on the basis of its contraction, endeavours to return the wing 115 to an inner position. Another possible component to use for the return of the wing 115 would be so-called clock springs, in other words a spring having a linear elastic action.

The solenoid and the pump which have been described above can be placed closely adjacent to one another, or separately, in different locations relative to the headrest 100. In one possible embodiment of the headrest 100, both the solenoid and the pump, however, are seated in the headrest 100. To enable whoever is seated in the vehicle seat to manoeuvre the wing or wings, in another and easily accessible location there is disposed a separate control device by which the solenoid and/or the pump can be operated. In this case (remote control of solenoid and/or pump), some form of connection to the headrest 100 is required, preferably one connection for compressed air and one for electrical signals to the solenoid.

An expedient way of arranging connections for electrical signals and/or compressed air to the headrest 100 can be described with renewed reference to Fig. 1: as is shown in this drawing, the headrest 100 is expediently equipped with or connected to a vehicle seat by a first 171 and a second 172 "leg". Expediently, these legs are used to carry up electrical signals and compressed air to the headrest 100, where they are connected to the solenoid and the pump. The supply of compressed air and electrical signals via the legs 171, 172 is shown in Fig. 1 by means of a "tube" 171', 172' in each leg 171, 172.

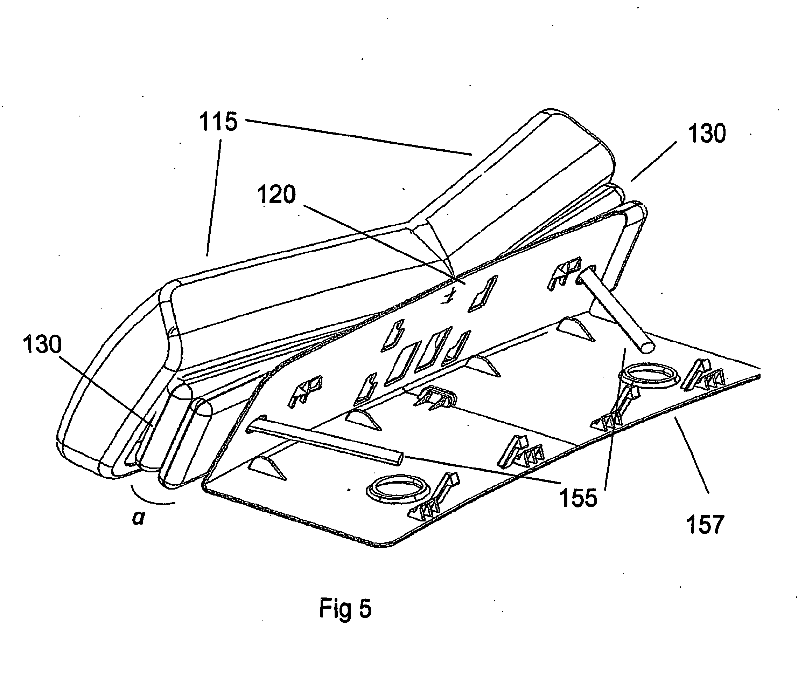

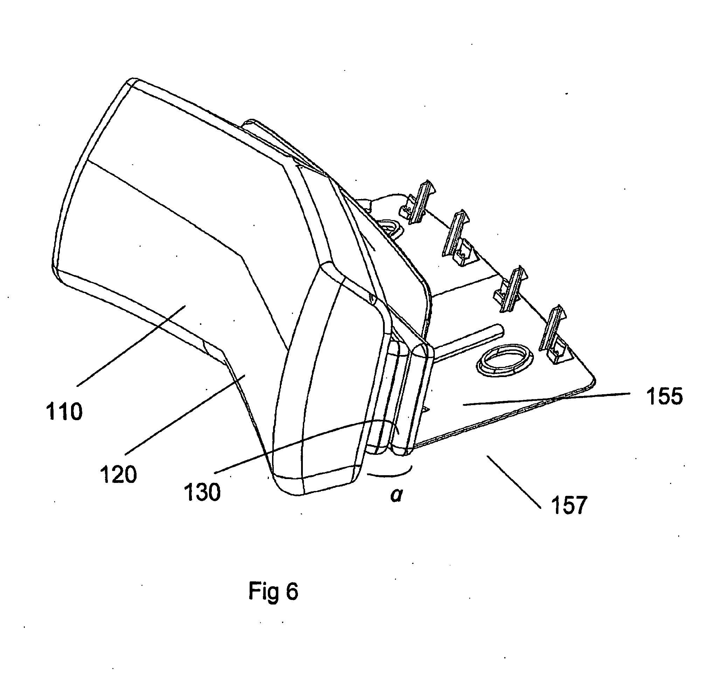

In Fig. 5 and 6, a headrest according to the invention is shown in somewhat greater detail than previously, at two different angles: in Fig. 5 from the rear and in Fig. 6 from the front. These drawings reveal still more clearly the "double-sided aspect" in a preferred embodiment of the invention, in other words that two "wings" 115 are seated on either side of a hinge 120 in the middle of the headrest 100 and that between each wing and the other headrest there is disposed an inflatable element 130 as described above.

In this embodiment, as can be seen from Fig. 5 and 6, the hinge or the mounting 120 is arranged such that the wing or wings will be able to be moved in a direction which means that the angle between the outer edge 116 of the wing and the fixed part is altered, so that the wing 115 will be able to be adjusted to provide different positions on one side of the head of an imaginary person. The wing 115 will therefore be able to be moved about an imaginary axis, whose principal extent coincides with the vertical direction in a vehicle in which the headrest 100 is intended to be disposed. This axis is shown as the "y-axis" in the system of coordinates in fig. 1.

Lines 155 for compressed air to each wing 115 are clearly apparent in the drawings. It is these lines which are controlled by a solenoid with the aid of a pump. Furthermore, Fig. 5 and 6 show a supporting plate 157 for the headrest 100, which can form part of the construction but which does not need to do so, but rather has merely been included to illustrate an exemplary embodiment.

One feature of the invention which has continuously been shown in the figures but which has not been commented on is the fact that the inflatable element 130 in Figures 2-6 comprises two separate elements, two "bellows" or chambers. The number of chambers in each element is expediently a function of the maximum angle α which the wing 115 may desirably assume relative to the other headrest 100. It lies within the scope of the invention to make the inflatable elements consist of a number of such chambers, alternatively for the inflatable elements merely to comprise a single chamber, this being determined by the required tilt-out angle for the "wing" 115.

The reason for the multi-chambered configuration is that a single "bag" in the inflatable element would give a balloon-like sphere when fully inflated, with little contact area against the wing 115. Furthermore, material used in "the bag" would not be capable of inflating far enough. The construction in question also gives a larger contact area against the wing 115 and, at the same time, the correct length when inflated.

Should the Inflatable elements 130 comprise two or more chambers, these can each be arranged such that they do not become a communicating system. The chambers can also be made to inflate to different degrees or can be made to be individually controllable.

Another option is to obtain a certain elastic effect in the wing 115 relative to the other headrest 100 by not fully inflating one or more chambers.

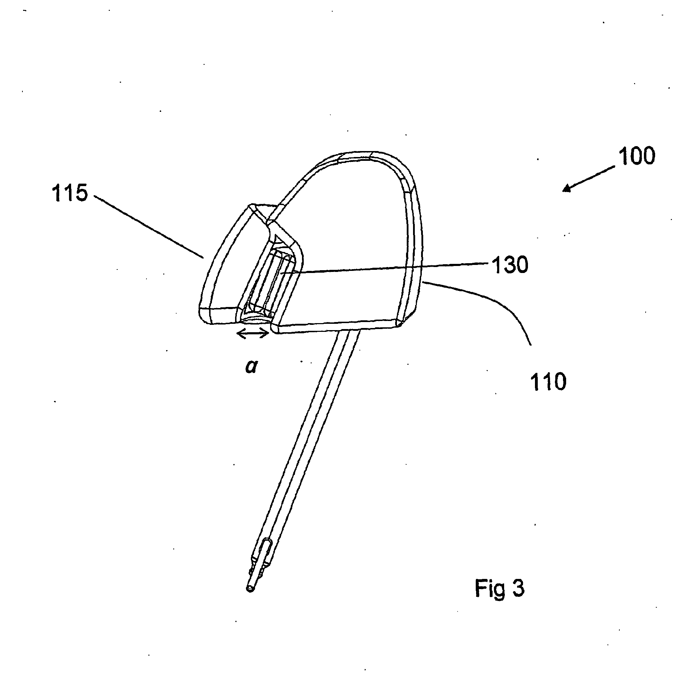

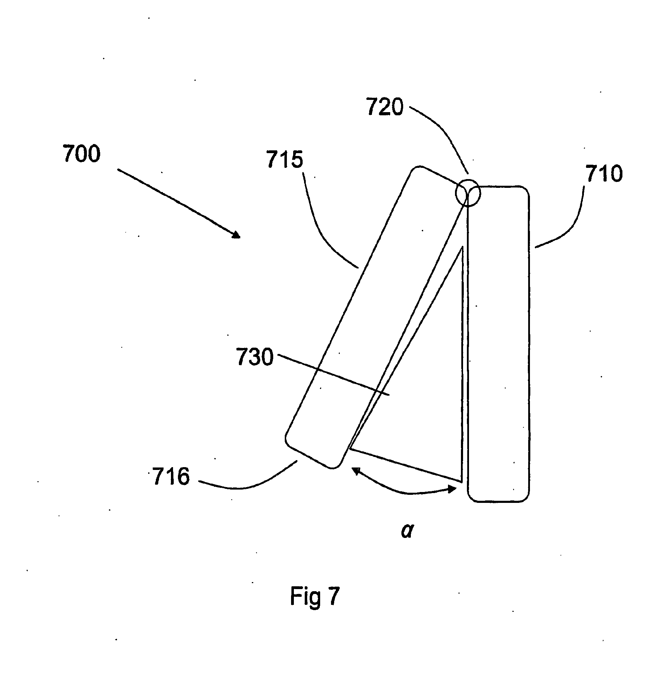

In Fig. 7, an alternative embodiment 700 of the invention is shown. Fig. 7 symbolically shows the headrest 700 viewed in substantially the same side perspective as in Fig. 3. This embodiment, too, comprises a fixed part 710 for attachment in a vehicle seat, a moving part 715, a hinge 720 about which the moving part 715 is mounted, and an inflatable element 730. The difference between the embodiment 700 and the embodiments previously shown can be seen from Fig. 7; in this embodiment, the hinge 720 is arranged such that the movement of the wing means that the distance between a bottom edge 717 of the wing 715 and the head of an imaginary user is altered. The principal movement of the wing is therefore about the top edge of the fixed part, where "top edge" here means that which constitutes the top edge when the headrest 700 is disposed in an imaginary vehicle seat.

In a further embodiment of the invention, it is naturally possible to arrange the hinge 720 such that the movement of the wing means that the distance between a top edge 717 of the wing 715 and the head of an imaginary user is altered. The principle movement of the wing is in this case about the bottom edge of the fixed part, where "bottom edge" here means that which constitutes the bottom edge when the headrest 700 is disposed in an imaginary vehicle seat.

Another way of describing the embodiment 700, and its said alternatives, is that the mounting 720 allows for the wing 715 to be moved in a direction which means that the distance between the back of the head of an imaginary user and the fixed part of the headrest 710 is varied. The wing 715 will therefore be able to be moved about an imaginary axis, whose principal direction of extent coincides with the lateral direction in a vehicle in which the headrest 100 is intended to be disposed. This axis is shown as the "x-axis" in the system of coordinates in Fig. 1.

## Claims

1. A headrest (100, 700) for a vehicle seat, comprising a fixed part (110, 710) for attachment in a vehicle seat and at least a first moving part (115, 715), which moving part (115, 715) is moveably mounted in a mounting (120, 720) in the fixed part, so that it can be moved between a first and a second position relative to the fixed part (110, 710), in which headrest the movement of the moving part (115, 715) from the said first position to the said second position is achieved by means of compressed air, wherein the mounting (120) is arranged such that the first moving part (115) will be able to be adjusted to provide different positions on one side of the head of an imaginary person, in other words movement about an imaginary axis (y), whose principal extent coincides with the vertical direction in a vehicle in which the headrest (100) is intended to be disposed, **characterised in that** the movement of the moving part (115, 715) from the first to the second position is achieved by means of an inflatable element (130, 730) in the headrest (100, 700) which is inflated by compressed air and thus expands, that the first moving part (115, 715) is maintained in said second position by means of the inflatable element (130, 730), and **in that** said inflatable element (130, 730) comprises at least two inflatable chambers.

2. The headrest (100, 700) according to claim 1, in which the inflation of the inflatable element (130, 730) brings about an increase in an angle (a) between an outer edge (116) of the first moving part (115, 715) and the fixed part (110, 710), and in which the inflatable element (130, 730) is disposed between the first moving part (115, 715) and the fixed part (110, 710) with an extent stretching to the said outer edge (116, 716) of the moving part (115, 715), the inflatable element (130, 730) being shaped such that its expansion in the course of the inflation is proportional over its extent to the said increased angle (a).

3. The headrest (100, 700) according to any of claims 1 or 2, in which the inflatable element (130, 730) further comprises a valve which regulates the compressed air supply to the element (130, 730), and in which the headrest (100, 700) further comprises means for returning the moving part (115, 715) to the first position if the inflatable element (130, 730) is deflated due to opening of said valve.

4. The headrest (100, 700) according to claim 3, in which the means for returning the first moving part (115, 715), comprise an elastic part, which is elongated upon the inflation of the element and which endeavours to be contracted and thus return the element to the first position when the valve is opened.

5. The headrest (100, 700) according to any one of claim 1 - 4, further comprising a connection (165) for external control devices, by means of which connection the inflation or deflation of the inflatable element (130) can be controlled.

6. The headrest (100, 700) according to any one of claims 1 - 5, further comprising two legs (171, 172) for attachment in a seat back of a vehicle, in which the one leg comprises means for supplying compressed air and the other leg comprises connections for controlling the inflation or deflation of the inflatable element.

## Patentansprüche

1. Kopfstütze (100, 700) für einen Fahrzeugsitz mit einem feststehenden Teil (110, 710) zur Anbringung in einem Fahrzeugsitz und wenigstens einem ersten beweglichen Teil (115, 715), wobei das bewegliche Teil (115, 715) beweglich in einer Aufnahme (120, 720) in dem feststehenden Teil gelagert ist, so dass es zwischen einer ersten und einer zweiten Position relativ zu dem feststehenden Teil (110, 710) bewegt werden kann, wobei in der Kopfstütze die Bewegung des beweglichen Teils (115, 715) von der ersten Position in die zweite Position mithilfe von Druckluft bewirkt wird, wobei die Aufnahme (120) dazu ausgestaltet ist, so dass das erste bewegliche Teil (115) eingestellt werden kann, um auf einer Seite des Kopfes einer imaginären Person unterschiedliche Positionen einnehmen zu können, mit anderen Worten eine Bewegung um eine imaginäre Achse (y) zu ermöglichen, deren Hauptausdehnung mit der vertikalen Richtung in einem Fahrzeug zusammenfällt, in dem die Kopfstütze (100) angebracht werden soll, **dadurch gekennzeichnet, dass** die Bewegung des beweglichen Teils (115, 715) aus der ersten in die zweite Position mithilfe eines aufblasbaren Elements (130, 730) in der Kopfstütze (100, 700) bewirkt wird, das durch Druckluft aufgeblasen wird und daher expandiert, dass das erste bewegliche Teil (115, 715) mithilfe des aufblasbaren Elements (130, 730) in der zweiten Position gehalten wird und dass das aufblasbare Element (130, 730) wenigstens zwei aufblasbare Kammern aufweist.

2. Kopfstütze (100, 700) nach Anspruch 1, bei der das Aufblasen des aufblasbaren Elements (130, 730) eine Vergrößerung des Winkels (a) zwischen einem äußeren Rand (116) des ersten beweglichen Teils (115, 715) und dem feststehenden Teil (110, 710) bewirkt und bei der das aufblasbare Element (130, 730) zwischen dem ersten beweglichen Teil (115, 715) und dem feststehenden Teil (110, 710) mit einer Ausdehnung angeordnet ist, die sich zu dem äußeren Rand (116, 716) des beweglichen Teils (115, 715) erstreckt, wobei das aufblasbare Element so geformt ist, dass seine Expansion im Verlauf des Aufblasens über seine Ausdehnung proportional zu dem vergrößerten Winkel (a) ist.

3. Kopfstütze (100, 700) nach einem der Ansprüche 1 oder 2, bei der das aufblasbare Element (130, 730) weiter ein Ventil aufweist, das die Zufuhr von Druckluft zu dem Element (130, 730) steuert, und wobei die Kopfstütze (100, 700) weiter Einrichtungen zum Zurückführen des beweglichen Teils (115, 715) in die erste Position, wenn das aufblasbare Element (130, 730) aufgrund der Öffnung des Ventils entlüftet wird, aufweist.

4. Kopfstütze (100, 700) nach Anspruch 3, bei der die Einrichtungen zum Zurückführen des ersten beweglichen Teils (115, 715) ein elastisches Teil aufweisen, das beim Aufblasen des Elements verlängert wird und das danach strebt, sich wieder zusammenzuziehen und daher das Element zu der ersten Position zurückzuführen, wenn das Ventil geöffnet wird.

5. Kopfstütze (100, 700) nach einem der Ansprüche 1 bis 4, die weiter eine Verbindung (165) für externe Steuergeräte aufweist, wobei mittels der Verbindung das Aufblasen oder Entlüften des aufblasbaren Elements (130) gesteuert werden kann.

6. Kopfstütze (100, 700) nach einem der Ansprüche 1 bis 5, die weiter zwei Tragstangen (171, 172) zur Befestigung in einer Rückenlehne eines Fahrzeugs aufweist, wobei eine Tragstange Einrichtungen zur Zufuhr von Druckluft und die andere Tragstange Verbindungen zum Steuern des Aufblasens oder des Entlüftens des aufblasbaren Elements aufweist.

## Revendications

1. Appui-tête (100, 700) pour siège de véhicule, comprenant une partie fixe (110, 710), pour fixation à un siège de véhicule, et au moins une première pâtie mobile (115, 715), ladite partie mobile (115, 715) étant montée de manière déplaçable dans une monture (120, 720) située dans la partie fixe, de manière à pouvoir être déplacée entre une première et une deuxième position par rapport à la partie fixe (110, 710), appui-tête dans lequel le déplacement de la partie mobile (115, 715), de ladite première position à ladite deuxième position, est obtenu au moyen d'air comprimé, dans lequel la monture (102) est agencée de manière que la première partie mobile (115) soit en mesure d'être ajustée pour fournir des positions différentes sur un côté de la tête d'une personne imaginaire, en d'autres termes un mouvement autour d'un axe (y) imaginaire, dont l'étendue principale coïncide avec la direction verticale dans un véhicule dans lequel l'appui-tête (100) est destiné à être disposé, **caractérisé en ce que** le déplacement de la partie mobile (115, 715), de la première à la deuxième position, est obtenu au moyen d'un élément gonflable (130, 730) situé dans l'appui-tête (100, 700), qui est gonflé par de l'air comprimé et ainsi se dilate, **en ce que** la première partie mobile (115, 715) est maintenue à ladite deuxième position au moyen de l'élément gonflable (130, 730), et **en ce que** ledit élément gonflable (130, 730) comprend au moins deux chambres gonflables.

2. Appui-tête (100, 700) selon la revendication 1, dans lequel le gonflage de l'élément gonflable (130, 730) produit une augmentation d'un angle (a) entre un bord extérieur (116) de la première partie mobile (115, 715) et la partie fixe (110, 710), et dans lequel l'élément gonflable (130, 730) est disposé entre la première partie mobile (115, 715) et la partie fixe (110, 710), avec un certain degré d'étirement sur ledit bord extérieur (116, 716) de la partie mobile (115, 715), l'élément gonflable (130, 730) étant conformé de manière que sa dilatation au cours du gonflage soit proportionnelle, sur son étendue, audit angle (a) augmenté.

3. Appui-tête (100, 700) selon l'une quelconque des revendications 1 ou 2, dans lequel l'élément gonflable (130, 730) comprend en outre une soupape régulant la fourniture d'air comprimé à l'élément (130, 730), et dans lequel l'appui-tête (100, 700) comprend en outre des moyens pour ramener la partie mobile (115, 715) à la première position, si l'élément gonflable (130, 730) est dégonflé suite à l'ouverture de ladite soupape.

4. Appui-tête (100, 700) selon la revendication 3, dans lequel les moyens pour ramener la partie mobile (115, 715) comprennent une partie élastique qui est allongée lors du gonflage de l'élément et qui s'efforce d'être contractée et, ainsi, de rappeler l'élément à la première position lorsque la soupape est ouverte.

5. Appui-tête (100, 700) selon l'une quelconque des revendications 1 à 4, comprenant en outre une connexion (165) pour des dispositifs de commande externes, connexion au moyen de laquelle le gonflage ou le dégonflage de l'élément gonflable (130, 730) peut être commandé.

6. Appui-tête (100, 700) selon l'une quelconque des revendications 1 à 5, comprenant en outre deux pattes (171, 172) pour fixation dans un dossier de siège d'un véhicule, dans lequel une première patte comprend des moyens pour fournir de l'air comprimé et l'autre patte comprend des connexions pour commander le gonflage ou le dégonflage de l'élément gonflable.
